# EUROPEAN PATENT SPECIFICATION

(11) **EP 2 801 634 B1**
(45) Date of publication and mention of the grant of the patent: **18.05.2016**
(21) Application number: 12864523.1
(22) Date of filing: 26.12.2012
(51) Int. Cl.: C22C 38/00, C21D 9/46, C22C 18/00, C22C 38/14, C23C 2/06, C23C 2/28, C22C 38/02, C22C 38/04, C22C 38/06, C22C 38/12, B32B 15/01

(54) **HOT-DIP GALVANNEALED STEEL SHEET**
FEUERVERZINKTES GALVANNEALED-STAHLBLECH
FEUILLE D'ACIER RECUITE PAR GALVANISATION PAR IMMERSION À CHAUD

(30) Priority: 05.01.2012 JP 2012000564
(43) Date of publication of application: 12.11.2014
(73) Proprietor: JFE Steel Corporation, Tokyo, 100-0011 (JP)
(72) Inventor: NAGANO, Hideki, Tokyo 100-0011 (JP); HARAKO, Daisuke, Tokyo 100-0011 (JP); TANAKA, Yuji, Tokyo 100-0011 (JP)
(74) Representative: Hoffmann Eitle
(86) International application number: PCT/JP2012/083671
(87) International publication number: WO 2013/103117

(56) References cited:
- EP-A1- 2 009 128
- WO-A1-2010/061957
- WO-A1-2011/122030
- JP-A- S64 299
- JP-A- H0 681 100
- JP-A- 2012 188 746
- US-A1- 2003 003 322
- US-A1- 2011 217 569

## Description

The present invention relates to a hot-dip galvannealed steel sheet which is suitable for use as an automotive steel sheet and achieves chipping resistance and adhesion after painting.

### BACKGROUND ART

Hot-rolled steel sheets having a tensile strength (TS) of up to about 440 MPa have conventionally been used in frames, chassis and other members of automobiles and trucks. Recently, however, reduction in thickness and weight of automotive steel sheets, and their increase in strength are encouraged in order to improve the crashworthiness of automobiles while protecting the global environment, and high-strength hot-rolled steel sheets are increasingly used. Accordingly, a surface-treated steel sheet which has high strength and excellent workability and to which rust preventive properties are imparted in terms of ensuring the rust preventive power of a body of a vehicle in association with the reduction in steel sheet thickness is required, and in particular a hot-dip galvannealed steel sheet having excellent corrosion resistance and weldability is desired.

Some proposals have heretofore been made on a high-strength hot-rolled steel sheet or a hot-dip galvanized high-strength steel sheet having excellent workability.

For instance, Patent Literature 1 discloses a high-strength steel sheet having a tensile strength of not lower than 590 MPa and an excellent workability and its manufacturing method, the high-strength steel sheet being obtained by producing molten steel containing 0.02 to 0.06% C, up to 0.3% Si, 0.5 to 2.0% Mn, up to 0.06% P, up to 0.005% S, up to 0.06% Al, up to 0.006% N, 0.05 to 0.5% Mo and 0.03 to 0.14% Ti by weight percentage, with the balance being essentially Fe, and hot-rolling the steel under conditions including a finish rolling end temperature of 880°C or higher and a coiling temperature of 570°C or higher, and being characterized in that the steel sheet is essentially of a ferrite structure single phase, and carbide precipitates containing Ti and Mo and having a mean grain size of smaller than 10 nm are dispersed in the steel sheet.

Patent Literature 2 discloses a method of manufacturing a hot-dip galvanized, high-strength hot-rolled steel sheet, which comprises the steps of: producing molten steel containing, in terms of mass%, 0.01 to 0.1% C, up to 0.3% Si, 0.2 to 2.0% Mn, up to 0.04% P, up to 0.02% S, up to 0.1% Al, up to 0.006% N, 0.03 to 0.2% Ti, and at least one of up to 0.5% Mo and up to 1.0% W, with the balance being Fe and inevitable impurities; hot-rolling the steel in an austenitic single phase region; coiling at 550°C or more to manufacture a ferrite single-phase hot-rolled steel sheet; and further removing scale and performing hot-dip galvanization without any other treatment, with the steel sheet to be manufactured being characterized in that the steel sheet satisfies 4.8 C + 4.2 Si + 0.4 Mn + 2 Ti ≤ 2.5 in terms of mass% and has a ferrite structure with an area ratio of 98% or more, and precipitates with a size of less than 10 nm, which contain Ti and at least one of Mo and W in a range satisfying (Mo + W) / (Ti + Mo + W) ≥ 0.2 in terms of atomic ratio, are dispersed in the steel sheet.

As another invention directed to a hot-dip galvannealed steel sheet, for instance, Patent Literature 3 discloses a hot-dip galvannealed steel sheet having 10 or more cracks per mm at the surface of a hot-dip plating film and being excellent in powdering resistance and low-temperature chipping resistance, the steel sheet being obtained by subjecting a hot-dip galvanized steel sheet having undergone alloying treatment to mechanical control of elongation percentage or pickling.

In addition, Patent Literature 4 discloses a method of improving the coating adhesion by forming a hot-dip galvannealing film on a cold-rolled steel sheet having specified irregularities. Patent Literature 5 discloses a galvannealed steel sheet, the galvannealed layer of which does not comprise carbide precipitates.

### CITATION LIST

### PATENT LITERATURE

Patent Literature 1: JP 2002-322543 A
Patent Literature 2: JP 2003-321736 A
Patent Literature 3: JP 11-200000 A
Patent Literature 4: JP 4-280953 A
Patent Literature 5: US 2011/0217569 A1

### SUMMARY OF INVENTION

### TECHNICAL PROBLEMS

However, the above-described Patent Literatures 1 to 4 have their respective problems as described below:

According to Patent Literatures 1 and 2, since fine carbide precipitates containing, for example, Ti and Mo are formed in ferrite, the resulting steel sheets are to be coiled at a coiling temperature (hereinafter also referred to as "CT") of at least 550°C after the end of finish rolling. In cases where a base steel sheet containing elements such as Si and Mn which are more likely to oxidize than Fe (these elements being hereinafter referred to as "readily oxidizable elements") is subjected to coiling under such a high CT condition, internal oxides containing the readily oxidizable elements are produced in the surface layer portion of the base steel sheet. As a result, a Zn-Fe alloying reaction is excessively promoted in the subsequent hot-dip galvanization or alloying treatment, thus causing a problem of deterioration in coating adhesion.

In automotive steel sheets, there may occur such a phenomenon in which paint or a plating film comes off due to impact from gravel chipping while a car is moving, and an excessive Zn-Fe alloying reaction also deteriorates the chipping resistance of the plating film. In addition, in cases where a hot-rolled steel sheet is used as the base steel sheet, because of its considerable surface asperities as compared to a cold-rolled steel sheet, a crystalline zinc phosphate film is more likely to grow to be thick in the chemical conversion step performed before formation of a paint film, leading to poor adhesion at the interface between the paint film and the plating layer after painting.

The technique disclosed in Patent Literature 3 improves the coating adhesion and the chipping resistance but causes concern about deterioration of the corrosion resistance because cracks are formed in the hot-dip plating film at a high density. Moreover, equipment for alkali treatment and pickling treatment is required for the aftertreatment step for forming cracks at the surface of the hot-dip plating film, leading to the problem of equipment cost.

In addition, in cases where a hot-rolled steel sheet is used as the base steel sheet in the invention of Patent Literature 4, it is difficult to control the surface roughness because of considerable surface asperities of the steel sheet. What is more, the crystalline zinc phosphate film is more likely to grow to be thick with increasing surface roughness and the adhesion to the paint film cannot be fully ensured.

In view of the situation as described above, an object of the present invention is to provide a hot-dip galvannealed steel sheet having excellent chipping resistance and excellent adhesion after painting while ensuring corrosion resistance.

### SOLUTION TO PROBLEMS

The inventors of the present invention have made an intensive study on the prior art problems and as a result found that the chipping resistance and the adhesion after painting are improved while ensuring corrosion resistance by dispersing precipitates containing one or more than one selected from the group consisting of Ti, Nb, V, Mo and W into a hot-dip galvannealing layer of a hot-dip galvannealed steel sheet.

More specifically, the chipping resistance is improved presumably because when the hot-dip galvannealing layer is subjected to chipping impact generating cracks at the interface between the plating layer and the base steel sheet, specified precipitates in the hot-dip galvannealing layer have a pinning effect at portions where the cracks are generated, and the pinning effect prevents the cracks from propagating and causing large peeling.

It was also found that, by dispersing specified precipitates in the hot-dip galavnnealing layer, zinc phosphate crystals formed in the crystalline zinc phosphate film serving as the underlayer formed on the hot-dip galvannealing layer before painting are not excessively thick but a fine crystalline film is formed and as a result the adhesion after painting is improved even in cases where a base steel sheet having considerable surface asperities such as a hot-rolled steel sheet is used. This is presumably because specified precipitates present in the hot-dip galvannealing layer and especially on the surface layer side of the hot-dip galvannealing layer (side opposite with the base steel plate side) function as nucleation sites for zinc phosphate crystals to grow fine zinc phosphate crystals at a high density to thereby exhibit sufficient anchoring effect between the paint film and the hot-dip galvannealing layer.

The present invention has been completed based on the foregoing findings and is summarized as follows:

(1) A hot-dip galvannealed steel sheet according to claim 1 comprising:
   a base steel sheet having a chemical composition in terms of mass% such that the base steel sheet consists of: at least 0.02% but up to 0.30% C; at least 0.01% but up to 2.50% Si; at least 0.1% but up to 3.0% Mn; at least 0.003% but up to 0.080% P; up to 0.01% S; and at least 0.001% but up to 0.200% Al,
   and further one or more than one selected from among at least 0.03% but up to 0.40% Ti; at least 0.001% but up to 0.200% Nb; at least 0.001% but up to 0.500% V; at least 0.01% but up to 0.50% Mo; and at least 0.001% but up to 0.200% W; and optionally from 0% to 0.005% B with the balance being Fe and inevitable impurities; and
   a hot-dip galvannealing layer formed on a surface of the base steel sheet and, in terms of mass%, consisting of 7 to 15% Fe,
   and at least 0.01% but up to 1.0% of precipitates containing one or more than one selected from the group consisting of Ti, Nb, V, Mo and W, wherein the precipitates are comprised of a carbide, with the balance being zinc and inevitable impurities.

(2) The hot-dip galvannealed steel sheet according to (1), wherein the precipitates have a mean particle diameter of up to 50 nm.

### ADVANTAGEOUS EFFECTS OF INVENTION

Also in cases where a high-strength hot-rolled steel sheet is used as the base material, the hot-dip galvannealed steel sheet of the invention has excellent corrosion resistance, chipping resistance and adhesion after painting by incorporating precipitates containing one or more than one selected from the group consisting of Ti, Nb, V, Mo and W in the hot-dip galvannealing layer, and is significantly effective for use in frames, chassis portions and the like of automobiles.

### BRIEF DESCRIPTION OF DRAWINGS

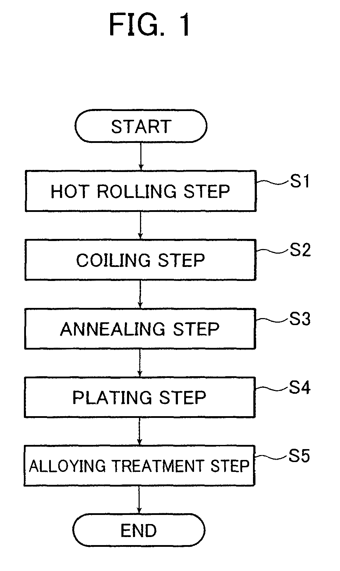

[FIG. 1] FIG. 1 is a flow chart showing a preferred embodiment of a method for manufacturing the hot-dip galvannealed steel sheet according to the present invention.

### DESCRIPTION OF EMBODIMENTS

The hot-dip galvannealed steel sheet of the invention is described below in detail with reference to a preferred embodiment.

The hot-dip galvannealed steel sheet of the invention has a base steel sheet having a predetermined chemical composition and a hot-dip galvannealing layer formed on the base steel sheet and containing predetermined precipitates. The base steel sheet and the hot-dip galvannealing layer are described below in detail.

Unless otherwise specified, the symbol "%" for the percentages of the ingredients to be described later refers to mass%.

### [Base Steel Sheet]

The base steel sheet in the hot-dip galvannealed steel sheet has a chemical composition such that the base steel sheet consists of: at least 0.02% but up to 0.30% C; at least 0.01% but up to 2.50% Si; at least 0.1% but up to 3.0% Mn; at least 0.003% but up to 0.080% P; up to 0.01% S; and at least 0.001% but up to 0.200% Al, as well as one or more than one selected from among at least 0.03% but up to 0.40% Ti; at least 0.001% but up to 0.200% Nb; at least 0.001% but up to 0.500% V; at least 0.01% but up to 0.50% Mo; and at least 0.001% but up to 0.200% W, and optionally from 0% to 0.005% B with the balance being comprised of Fe and inevitable impurities.

The reasons why the chemical composition of the base steel sheet is restricted as above are described below.

### (C: at least 0.02% but up to 0.30%)

C is an element necessary to form carbide precipitates in the base steel sheet and to increase the strength of the base steel sheet, and is to be incorporated in an amount of at least 0.02%. On the other hand, a C content in excess of 0.30% deteriorates the weldability. Therefore, the C content is at least 0.02% but up to 0.30%.

### (Si: at least 0.01% but up to 2.50%)

Si is effective as a solid solution strengthening element and is preferably incorporated in an amount of at least 0.01% in order to show the strengthening effect. On the other hand, when Si is incorporated in a large amount exceeding 2.50%, silicon oxides are concentrated on surfaces of the base steel sheet in the CGL (line for manufacturing hot-dip galvanized steel sheets) annealing process, which may cause a coating defect and deteriorate the coating adhesion. Therefore, the Si content is at least 0.01% but up to 2.50%.

### (Mn: at least 0.1% but up to 3.0%)

Mn is added to increase the strength of the base steel sheet and is preferably incorporated in an amount of at least 0.1% and more preferably at least 0.6% in order to show the strengthening effect. On the other hand, if Mn is added in an amount exceeding 3.0%, manganese oxides are concentrated on surfaces of the base steel sheet in the CGL annealing process, which may cause a coating defect and deteriorate the coating adhesion. Therefore, the Mn content is at least 0.1% but up to 3.0%.

### (P: at least 0.003% but up to 0.080%)

P is one of inevitably contained elements and is effective in strengthening the steel sheet and this effect is obtained at a content of 0.003% or more, and there is concern about cost increases in order to adjust the content to less than 0.003%. On the other hand, a P content in excess of 0.080% deteriorates the weldability and the surface quality. A desired alloying degree cannot be obtained unless the alloying treatment temperature is further increased during alloying treatment, but an increase in the alloying treatment temperature leads to deterioration of the ductility of the base steel sheet and the adhesion of the hot-dip galvannealing layer. Therefore, the P content is at least 0.003% but up to 0.08%.

### (S: up to 0.01%)

The S content is to be adjusted to 0.01% or less because the toughness will be reduced if grain boundary segregation of S occurs or a large amount of MnS is produced. The lower limit of the S content is not particularly limited but S may be incorporated in an amount corresponding to the impurity content.

### (Al: at least 0.001% but up to 0.200%)

Al is added for the purpose of deoxidation of molten steel but this purpose cannot be achieved when the content is less than 0.001%. On the other hand, when the content is in excess of 0.200%, a large amount of inclusions are produced, which may cause flaws in the steel sheet. Therefore, the Al content is at least 0.001% but up to 0.200%.

(Ti: at least 0.03% but up to 0.40%)
(Nb: at least 0.001% but up to 0.200%)
(V: at least 0.001% but up to 0.500%)
(Mo: at least 0.01% but up to 0.50%)
(W: at least 0.001% but up to 0.200%)

Ti, Nb, V, Mo and W are elements necessary to form precipitates (in particular carbide precipitates) in the base steel sheet and one or more than one selected from the group consisting of these elements are added. In general, these elements are often contained in the base steel sheet in the form of precipitates containing these elements.

Of these elements, in particular Ti is an element which has high ability to enhance the precipitation and is effective also from the viewpoint of costs. However, when the amount of addition is less than 0.03%, the amount of precipitates in the base steel sheet necessary to incorporate precipitates (in particular carbide precipitates) in the hot-dip galvannealing layer is not sufficient, whereas when the amount exceeds 0.40%, the effect is saturated to incur cost increases. Therefore, the Ti content is at least 0.03% but up to 0.40%.

Also concerning Nb, V, Mo and W, for the same reasons as Ti on the upper limit and the lower limit of the content range, the Nb content is from 0.001 to 0.200%, the V content is from 0.001 to 0.500%, the Mo content is from 0.01 to 0.50%, and the W content is from 0.001 to 0.200%.

### (B: from 0% to 0.005%)

B is an element optionally added to improve the hardenability and the B content is preferably from 0% to 0.005% and more preferably at least 0.0005% but up to 0.005% in terms of the effect of promoting quenching and more excellent coating adhesion.

The balance of the base steel sheet is comprised of Fe and inevitable impurity elements. Exemplary inevitable impurities include, in addition to the above, N, Cr, Cu, Sn, Ni, Ca, Zn, Co, As, Sb, Pb and Se.

It should be noted that N is an element which forms coarse precipitates of TiN and the like to cause reduction of local elongation and is preferably reduced to the least possible level in the invention. An N content exceeding 0.01% may lower the formability due to formation of a coarse nitride. Therefore, the N content is preferably up to 0.01%.

### [Hot-Dip Galvannealing Layer]

The hot-dip galvannealing layer (hereinafter also referred to simply as "Zn-plating layer") is a plating layer primarily composed of an Fe-Zn alloy and obtained by diffusing Fe in the base steel sheet into a Zn-plating film through an alloying reaction, and is formed on the base steel sheet. The Zn-plating layer is a layer consisting of 7 to 15% Fe and, in terms of mass%, at least 0.01% but up to 1.0% of precipitates containing one or more than one selected from the group consisting of Ti, Nb, V, Mo and W, wherein the precipitates are composed of a carbide the balance being comprised of Zn and inevitable impurities.

The reasons why the chemical composition of the Zn-plating layer is restricted as above are described below.

### (Fe: 7.0 to 15.0%)

When the Fe content in the Zn-plating layer is less than 7.0 mass%, the Zn-Fe alloying reaction is not sufficient to fully diffuse precipitates into the Zn-plating layer from the base steel sheet and the effect of improving the chipping resistance and the adhesion after painting is not shown. An Fe content in excess of 15.0 mass% causes the Zn-Fe alloying reaction to proceed excessively to produce a thick brittle Γ phase in the vicinity of the interface between the Zn-plating layer and the base steel sheet, thereby deteriorating the chipping resistance. Therefore, the Fe content in the Zn-plating layer is from 7.0 to 15.0%.

The Fe content in the Zn-plating layer can be measured by ICP emission spectrometry.

### (Precipitates containing one or more than one selected from the group consisting of Ti, Nb, V, Mo and W)

A hot-dip galvannealed steel sheet having excellent chipping resistance and adhesion after painting is obtained while also ensuring corrosion resistance by dispersing a predetermined amount of precipitates containing one or more than one selected from the group consisting of Ti, Nb, V, Mo and W into the Zn-plating layer.

The content of the precipitates which are present in the Zn-plating layer and contain Ti, Nb, V, Mo and W is at least 0.01%. When the content is within the above range, the hot-dip galvannealed steel sheet obtained has desired properties.

On the other hand, when the content of the precipitates is less than 0.01 mass%, the amount of precipitates present in the Zn-plating layer is small and the effect of improving the chipping resistance and adhesion after painting is not obtained. The upper limit of the content of the precipitates is not particularly limited and is desirably up to 1.0 mass% because if the Zn-plating layer contains too many precipitates, there are cases where the corrosion resistance of the Zn-plating layer itself cannot be ensured, and cases where the Zn-plating layer is made brittle because of fine cracks formed in the Zn-plating layer.

An excellent method used to check the amount of existing precipitates includes, for example, selectively dissolving the Zn-plating layer, extracting precipitates as residues and performing quantitative analysis of the extracted precipitates, but the analysis method is not particularly limited.

The precipitates contain one or more than one selected from the group consisting of Ti, Nb, V, Mo and W. The precipitates are often primarily composed of a carbide but, for example, a nitride, a carbonitride and a sulfide are also precipitated depending on the chemical ingredients.

The mean particle diameter of the precipitates is not particularly limited, but is preferably up to 50 nm because the precipitates with such a mean particle diameter are more excellent in pinning effect on cracks formed in the Zn-plating layer; more effective in improving the chipping resistance; and are more useful as nucleation sites for a crystalline zinc phosphate film and, accordingly, more effective in improving the adhesion after painting. In particular, the mean particle diameter is preferably from 3 to 20 nm because the above effects are more excellent.

The method of measuring the particle size of the precipitates is not particularly limited and, for example, the particle size of each particle is measured through observation with TEM after the Zn-plating layer is sliced along the cross-section using FIB (focused ion beam).

The mean particle diameter of the precipitates is obtained by measuring the diameter of arbitrarily selected 10 or more precipitates and calculating the arithmetic mean of the diameter values. The circle equivalent diameter is used if the precipitates are not circular on the TEM photograph. The circle equivalent diameter is a diameter of a circle assuming that a precipitate has the shape of the circle which has the same projected area as that of the precipitate.

The distribution state of the precipitates in the Zn-plating layer is not particularly limited and the precipitates may be concentrated in the vicinity of the interface between the Zn-plating layer and the base steel sheet or be dispersed in the whole of the Zn-plating layer.

The shape of the precipitates is also not particularly limited and may be, for example, spherical or ellipsoidal.

The coating weight of the Zn-plating layer is desirably at least 10 g/m² as the coating weight on one side of the base steel sheet in terms of ensuring the corrosion resistance, and is desirably up to 90 g/m² as the coating weight on one side in terms of costs and coating adhesion.

### [Method of Manufacturing Hot-Dip Galvannealed Steel Sheet]

The method of manufacturing the above-described hot-dip galvannealed steel sheet is not particularly limited and any method may be applied as long as a Zn-plating layer containing predetermined precipitates can be formed on a predetermined base steel sheet.

In particular, a hot-dip galvannealed steel sheet-manufacturing method as shown in the flow chart of FIG. 1 is preferable from the viewpoint that a desired hot-dip galvannealed steel sheet is obtained with high efficiency. The manufacturing method includes a hot rolling step (S1), a coiling step (S2), an annealing step (S3), a plating step (S4) and an alloying treatment step (S5). According to this manufacturing method, by subjecting the base steel sheet containing fine precipitates to hot-dip galvanization and its subsequent alloying treatment, the precipitates can be diffused into the Zn-plating layer from the surface layer of the steel sheet and as a result the Zn-plating layer obtained has the precipitates dispersed therein.

Each step is described in detail below.

### (Hot rolling step)

The hot rolling step S1 is a step in which a billet (including an ingot, a slab and a thin slab) having the above-described chemical composition of the base steel sheet is heated in a heating furnace and subjected to hot rolling in a roughing mill and a finish rolling mill to process the billet into a band steel sheet (strip).

The billet for use in the step S1 is manufactured by, for example, producing a molten steel satisfying the above-described composition of the base steel sheet in a converter furnace, an electric furnace or the like according to a known molten steel production method and casting the produced molten steel by a known casting process such as a continuous casting process or an ingot casting process.

When heated in the heating furnace in the step S1, the billet is preferably heated to a temperature ranging from 1,100 to 1,300°C and more preferably from 1,200 to 1,250°C. The temperature within the above range is preferable in terms of ensuring the finish rolling temperature.

The heated steel material is roughly rolled by a roughing mill and is then subjected to finish rolling in a finish rolling mill to obtain a hot-rolled steel sheet. The temperature at the end of finish rolling in finish rolling is preferably at least 850°C and more preferably at least 900°C. The temperature within the above range is preferable in terms of alleviating rolling load.

The thickness of the steel sheet after hot rolling is not particularly limited and is suitably in a range of about 1.4 to 4.0 mm.

### (Coiling step)

The coiling step S2 is a step in which the steel sheet hot-rolled in the hot rolling step S1 is coiled.

In the step S2, the steel sheet is preferably coiled at a coiling temperature in a temperature range of up to 540°C. By performing coiling at the coiling temperature, production of an internal oxide containing an readily oxidizable element in the surface portion of the hot-rolled steel sheet is suppressed, consequently leading to improvement of the chipping resistance and adhesion after painting of the hot-dip galvannealed steel sheet.

The lower limit of the coiling temperature is preferably at least 100°C. If the coiling temperature is equal to or higher than the above-defined temperature, water used in cooling which follows hot rolling evaporates, so that water can be kept from being retained in the coil and as a result corrosion of the steel sheet can be further suppressed.

A surface cleaning step and/or a cold rolling step may be optionally performed after the end of the coiling step S2 but before the annealing step S3 to be described later.

The surface cleaning step is a step in which surfaces of the steel sheet obtained in the step S2 is subjected to pickling or degreasing. It is preferable to perform the surface cleaning step because scale formed on the surfaces of the steel sheet obtained in the step S2 and foreign matter adhered to the surfaces of the steel sheet can be removed and plating failure in the plating step S4 to be described later is further suppressed.

The cold rolling step is a step in which the steel sheet obtained in the step S2 or the steel sheet having undergone the pickling or degreasing is subjected to cold rolling. By performing cold rolling, a steel sheet with a predetermined thickness can be obtained. The cold-rolled steel sheet may often have rolling oil or iron powder adhered thereto and hence be cleaned with an alkali after cold rolling when necessary.

### (Annealing step)

The annealing step S3 is a step in which the hot-rolled steel sheet obtained in the coiling step S2 is subjected to annealing treatment. Annealing is performed to improve the zinc coatability through reduction of the surface oxide film on the surfaces of the hot-rolled steel sheet and a desired effect is obtained if the temperature is within the above range.

Annealing treatment is preferably performed until the hot-rolled steel sheet reaches a maximum temperature of 500 to 800°C and more preferably 650 to 750°C. The steel sheet after the completion of the annealing step S3 is cooled and dipped into a plating bath with the sheet temperature at the time of entering the bath being set to a predetermined value, and the cooling rate from the cooling section to the plating bath is desirably from 0.1 to 2.0°C/sec. By performing annealing at a temperature within the above range and then cooling at the above cooling rate, Ti, Nb, V, Mo and W which were not precipitated during hot rolling and are remaining in solid solution are precipitated in the surface layer and the interior of the steel sheet in the form of fine precipitates (in particular fine carbide precipitates) to obtain a desired strength while the amount of precipitates to be diffused into the Zn-plating layer is increased.

The atmosphere in which annealing treatment is performed is usually a reducing atmosphere and more specifically the atmosphere preferably has an H₂ concentration of 2 to 25 vol% and a dew point of -10°C or lower.

At an H₂ concentration of less than 2 vol%, reduction is not sufficient, leading to deterioration of the zinc coatability. On the other hand, if the H₂ concentration is increased above 25%, the effect is saturated and the treatment cost is increased, which is economically disadvantageous. At a dew point increased above -10°C, reduction is not sufficient, leading to deterioration of the zinc coatability. The balance excluding H₂ is preferably comprised of an inert gas such as N₂.

### (Plating step)

The plating step S4 is a step in which the hot-rolled steel sheet annealed in the annealing step S3 is subjected to hot-dip galvanization to form a hot-dip galvanization layer on surfaces of the hot-rolled steel sheet. The plating treatment is preferably performed on a continuous galvanizing line.

The procedure of the hot-dip galvanization is not particularly limited and any known method may be used. In particular, the hot-rolled steel sheet having undergone the annealing step S3 is preferably cooled to a temperature close to the plating bath temperature (in a temperature range of 450 to 550°C) and dipped into a hot-dip galvanizing bath, and especially the sheet temperature at the time of entering the plating bath is more preferably set to 470°C or higher in terms of promoting the diffusion of fine precipitates into the plating layer.

In order to facilitate the control of the coating weight, the Al concentration in the hot-dip galvanizing bath is preferably from 0.10 to 0.22 mass%.

The dipping into the hot-dip galvanizing bath may be optionally followed by wiping for adjusting the zinc coating weight on the surfaces of the hot-rolled steel sheet.

### (Alloying treatment)

The alloying treatment step S5 is a step in which the hot-rolled steel sheet having undergone the plating step S4 is subjected to alloying treatment to form a predetermined Zn-plating layer.

The temperature in the alloying treatment is preferably in a range of 350 to 550°C and more preferably 400 to 520°C. The temperature is even more preferably in a range of 450 to 520°C in terms of promoting diffusion of fine precipitates into the plating layer. By performing alloying treatment in the above-defined temperature range, predetermined precipitates are formed in the hot-dip galvannealing layer and consequently the resulting hot-dip galvannealed steel sheet has excellent chipping resistance and excellent adhesion after painting.

In this step S5, the temperature elevation rate before reaching the alloying treatment temperature, the retention time at the alloying treatment temperature and the cooling rate after retention are not particularly limited. The heating means in alloying treatment may be any of means including radiation heating, high-frequency induction heating and electrical resistance heating if the Zn-plating layer in the above-described form can be formed.

The hot-dip galvannealed steel sheet obtained by the above-described procedure has excellent workability and corrosion resistance and also has excellent chipping resistance and adhesion after painting.

In addition, the surfaces of the hot-dip galvannealed steel sheet can be optionally subjected to aftertreatments such as rust prevention (e.g., chromate treatment or chromium-free treatment), phosphate treatment and application of a resin film, and it is also possible to apply anti-rust oil.

### EXAMPLES

The present invention is described below more specifically by way of Examples.

Slabs each having a composition shown in Table 1 were heated at 1,250°C and were then hot-rolled under manufacturing conditions on hot rolling shown in Table 2 to obtain hot-rolled steel strips with a thickness of 2.3 mm.

The unit of the numerical values in Table 1 is mass%.

[Table 1]

**Table 1**

| Steel type | C | Si | Mn | P | S | Al | Ti | Nb | V | Mo | W | B | N | Remarks |
|---|---|---|---|---|---|---|---|---|---|---|---|---|---|---|
| A | 0.06 | 0.05 | 1.2 | 0.005 | 0.001 | 0.005 | 0.10 | | 0.08 | | | | 0.005 | Example |
| B | 0.09 | 0.05 | 1.7 | 0.005 | 0.001 | 0.005 | 0.15 | | 0.24 | | | | 0.008 | Example |
| C | 0.15 | 0.05 | 1.5 | 0.005 | 0.001 | 0.005 | 0.11 | | 0.48 | | | | 0.010 | Example |
| D | 0.04 | 0.05 | 0.6 | 0.005 | 0.001 | 0.005 | 0.09 | | | 0.10 | | | 0.002 | Example |
| E | 0.06 | 0.05 | 1.2 | 0.005 | 0.001 | 0.005 | 0.10 | | | 0.21 | | | 0.005 | Example |
| F | 0.10 | 0.05 | 1.1 | 0.005 | 0.001 | 0.005 | 0.15 | | | 0.40 | | | 0.006 | Example |
| G | 0.04 | 0.05 | 1.0 | 0.005 | 0.001 | 0.005 | 0.13 | | | | 0.02 | | 0.009 | Example |
| H | 0.03 | 0.05 | 0.9 | 0.005 | 0.001 | 0.005 | 0.02 | | | | | | 0.010 | Comparative Example |
| I | 0.03 | 0.05 | 0.7 | 0.005 | 0.001 | 0.005 | 0.04 | | | | | | 0.006 | Example |
| J | 0.03 | 0.05 | 0.5 | 0.005 | 0.001 | 0.005 | 0.07 | | | | | 0.002 | 0.003 | Example |
| K | 0.03 | 0.05 | 0.5 | 0.005 | 0.001 | 0.005 | 0.07 | | | | | 0.004 | 0.005 | Example |
| L | 0.01 | 0.05 | 0.4 | 0.005 | 0.001 | 0.005 | 0.07 | | 0.11 | | | | 0.009 | Comparative Example |
| M | 0.02 | 0.05 | 0.9 | 0.005 | 0.001 | 0.005 | 0.05 | 0.01 | | 0.05 | | | 0.010 | Example |
| N | 0.16 | 0.05 | 1.4 | 0.005 | 0.001 | 0.005 | 0.15 | 0.05 | | 0.15 | | | 0.005 | Example |
| O | 0.07 | 0.7 | 3.1 | 0.005 | 0.001 | 0.005 | 0.15 | | 0.15 | | | | 0.010 | Comparative Example |
| P | 0.07 | 1.4 | 1.5 | 0.005 | 0.001 | 0.005 | 0.15 | | 0.15 | | | | 0.005 | Example |
| Q | 0.07 | 2.4 | 1.5 | 0.005 | 0.001 | 0.005 | 0.15 | | 0.15 | | | | 0.002 | Example |

[Table 2]

**Table 2**

| level | Steel type | Hot rolling manufacturing condition | | CGL manufacturing condition | | Properties of Zn-plating layer | | | | | Evaluation results | | | | | | Remarks |
|---|---|---|---|---|---|---|---|---|---|---|---|---|---|---|---|---|---|
| | | Finish rolling, end temperature (°C) | Coiling temperature (°C) | Annealing temperature (°C) | Alloying treatment temperature (°C) | Coating weight (g/m²) | Fe% in Zn-plating layer | Presence of precipitates in Zn-plating layer | Conc. of precipitates in Zn-plating layer (mass%) | Mean particle size of precipitates in Zn-plating layer (nm) | TS (MPa) | EL (%) | TS×EL | Chipping resistance | Adhesion after painting | Corrosion resistance | |
| 1 | A | 990 | 510 | 700 | 480 | 50 | 11,0 | Yes | 0,025 | 9 | 820 | 22 | 18040 | A | A | A | Example |
| 2 | B | 960 | 500 | 700 | 470 | 45 | 11,5 | Yes | 0,03 | 5 | 1050 | 17 | 17850 | A | A | A | Example |
| 3 | C | 940 | 490 | 670 | 470 | 40 | 11,0 | Yes | 0,052 | 10 | 1070 | 16 | 17120 | A | A | A | Example |
| 4 | D | 940 | 520 | 700 | 480 | 40 | 11,3 | Yes | 0,044 | 5 | 620 | 32 | 19840 | A | A | A | Example |
| 5 | E | 940 | 520 | 700 | 480 | 45 | 10,5 | Yes | 0,013 | 4 | 820 | 23 | 18860 | A | A | A | Example |
| 6 | F | 950 | 500 | 670 | 470 | 45 | 10,7 | Yes | 0,022 | 7 | 1050 | 17 | 17850 | A | A | A | Example |
| 7 | G | 970 | 490 | 700 | 480 | 45 | 10,1 | Yes | 0,061 | 10 | 630 | 29 | 18270 | A | A | A | Example |
| 8 | H | 950 | 500 | 700 | 420 | 45 | 11,5 | No | 0 | - | 500 | 29 | 14500 | C | C | A | Comparative Example |
| 9 | I | 950 | 500 | 700 | 470 | 45 | 11,5 | Yes | 0,036 | 5 | 720 | 26 | 18720 | A | B | A | Example |
| 10 | J | 950 | 500 | 700 | 470 | 45 | 12,4 | Yes | 0,058 | 10 | 590 | 28 | 16520 | A | B | A | Example |
| 11 | K | 950 | 500 | 700 | 470 | 45 | 10,7 | Yes | 0,042 | 8 | 620 | 29 | 17980 | A | B | A | Example |
| 12 | L | 940 | 490 | 700 | 470 | 45 | 10,4 | No | 0 | - | 460 | 30 | 13800 | C | C | A | Comparative Example |
| 13 | M | 950 | 500 | 700 | 470 | 45 | 10,9 | Yes | 0,035 | 7 | 620 | 29 | 17980 | A | B | A | Example |
| 14 | N | 970 | 470 | 690 | 460 | 45 | 11,5 | Yes | 0,022 | 5 | 610 | 30 | 18300 | A | B | A | Example |
| 15 | O | 950 | 460 | 650 | 450 | 45 | 11,6 | Yes | 0,005 | 4 | 1220 | 13 | 15860 | C | C | A | Comparative Example |
| 16 | P | 970 | 490 | 690 | 460 | 45 | 11,9 | Yes | 0,029 | 6 | 1050 | 15 | 15750 | A | B | A | Example |
| 17 | Q | 950 | 460 | 640 | 510 | 45 | 11,6 | Yes | 0,036 | 5 | 1050 | 18 | 18900 | A | B | A | Example |

Next, the resulting hot-rolled steel sheets are subjected to annealing treatment, plating treatment and alloying treatment.

More specifically, the hot-rolled steel sheets were first subjected to reduction annealing before plating on a CGL line at a dew point of -35°C in a 5% H₂-N₂ atmosphere until the annealing temperature (corresponding to the maximum temperature reached of the steel sheets) shown in Table 2 was reached, were then cooled to 470°C at a cooling rate after cooling section of 0.3°C/sec, and thereafter dipped into a hot-dip galvanizing bath (bath composition: Zn - 0.13 mass% Al - 0.03 mass% Fe) at a bath temperature of 460°C to perform plating treatment.

After the hot-dip galvanization, alloying treatment was performed for about 20 seconds at an alloying treatment temperature shown in Table 2 to manufacture hot-dip galvannealed steel sheets.

Each of the manufactured hot-dip galvannealed steel sheets was sliced by FIB (focused ion beam) along a cross-section in the vicinity of the interface between the Zn-plating layer and the steel sheet and was subsequently subjected to TEM observation and EDX composition analysis, and carbide precipitates were found to be in the Zn-plating layer at the other levels than level 8 and level 13.

In addition, electrolytic extraction with a 10% acetylacetone - 1% tetramethylammonium chloride - methanol electrolytic solution (AA electrolytic solution) was performed for the measurement of the amount of precipitates in the Zn-plating layer. In this process, in order to selectively dissolve the Zn-plating layer, the electrolysis was carried out as the controlled-potential electrolysis which dissolves zinc but does not dissolve iron. All of the resulting extraction residues were wholly dissolved and the amount of precipitates containing Ti, Nb, V, M and W was measured by ICP analysis.

The Fe content in the Zn-plating layer was measured by first dissolving and removing only the Zn-plating layer using a 5% HCl aqueous solution containing an inhibitor added thereto and subsequently analyzing the Fe concentration in the solution by ICP. The coating weight was measured from the difference in weight between before and after removal of the Zn-plating layer.

The mean particle size of the precipitates in the Zn-plating layer was checked by slicing the Zn-plating layer along the cross-section by FIB and then performing TEM observation and EDX composition analysis.

### [Various Kinds of Measurement]

### (Workability)

Concerning the workability of each hot-dip galvannealed steel sheet, a JIS 5 tensile test specimen was taken from a sample in a direction of 90° with respect to the rolling direction and subjected to a tensile test at a constant crosshead speed of 10 mm/min according to the definitions of JIS Z 2241 to measure the tensile strength (TS/MPa) and the elongation (EL%). A specimen satisfying TS x EL ≥ 15,000 was rated "good" and a specimen satisfying TS x EL < 15,000 was rated "poor." The results are shown in Table 2.

### (Chipping resistance)

Concerning the chipping resistance of each hot-dip galvannealed steel sheet, a specimen cut into a size of 70 mm x 150 mm was subjected to phosphate chemical conversion treatment using a commercially available solution for phosphate chemical conversion treatment (Nihon Parkerizing Co., Ltd.) and was then subjected to three-coat painting (total film thickness: 100 µm) with a cation electro-coat (Nippon Paint Co., Ltd.) (film thickness: 20 ± 2 µm), an intermediate coat (Nippon Paint Co., Ltd.), and a topcoat (Nippon Paint Co., Ltd.). Then, the painted sheet was cooled to and held at -20°C and subjected to a chipping test which involves hitting the painted sheet with gravel for road construction having a diameter of 4 to 6 µm in a gravelometer at an air pressure of 2.0 kgf/cm², and the average peeling diameter was measured. The results obtained were evaluated based on the following criteria, and A and B were deemed to be good. The results are shown in Table 2.
A: The average peeling diameter is less than 1.5 mm;
B: The average peeling diameter is 1.5 mm or more but less than 3.0 mm; and
C: The average peeling diameter is 3.0 mm or more.

The average peeling diameter was determined by measuring the diameter of three or more peeled portions arbitrarily selected in a painted sheet and calculating the arithmetic mean of the measured values. The circle equivalent diameter is used if a peeled portion is not circular. The circle equivalent diameter is a diameter of a circle assuming that a peeled portion has the shape of the circle which has the same projected area as that of the peeled portion.

### (Adhesion after painting)

Concerning the adhesion after painting of each hot-dip galvannealed steel sheet, a specimen cut into a size of 70 mm x 150 mm was subjected to phosphate chemical conversion treatment using a commercially available solution for phosphate chemical conversion treatment (Nihon Parkerizing Co., Ltd.) and was then subjected to painting with a cation electro-coat (Nippon Paint Co., Ltd.) (film thickness: 20 ± 2 µm). Then, the painted sheet was immersed in distilled water heated to 40°C for 500 hours and subjected to a cross-cut test according to JIS K5400 to measure the paint film residual rate. The results obtained were evaluated based on the following criteria, and A and B were deemed to be good. The results are shown in Table 2.
A: The paint film residual rate is 100%;
B: The paint film residual rate is 90% or more but less than 100%; and
C: The paint film residual rate is less than 90%.

### (Corrosion resistance)

Concerning the corrosion resistance of each hot-dip galvannealed steel sheet, a specimen cut into a size of 70 mm x 150 mm was subjected to a 3-day salt spray test according to JIS Z 2371 (2000), a corrosion product was removed by 1-minute washing with chromic acid (concentration: 200 g/L, 80°C), the amount of coating reduction due to corrosion (g/m²·day) on one side between before and after testing was measured by a gravimetric method, and the specimen was evaluated based on the following criteria. The results are shown in Table 2.
A (good): less than 20 g/m²·day
B (poor): 20 g/m²·day or more.

As shown in Table 2, the hot-dip galvannealed steel sheets of the present invention were excellent in all of chipping resistance, adhesion after painting and corrosion resistance.

On the other hand, Comparative Examples (levels 8, 12 and 15) which do not fall within the scope of the invention were rated low in one or another of the above evaluation items.

## Claims

1. A hot-dip galvannealed steel sheet comprising:
a base steel sheet having a chemical composition in terms of mass% such that the base steel sheet consists of:
at least 0.02% but up to 0.30% C; at least 0.01% but up to 2.50% Si; at least 0.1% but up to 3.0% Mn; at least 0.003% but up to 0.080% P; up to 0.01% S; and at least 0.001% but up to 0.200% Al,
and further one or more than one selected from among at least 0.03% but up to 0.40% Ti; at least 0.001% but up to 0.200% Nb; at least 0.001% but up to 0.500% V; at least 0.01% but up to 0.50% Mo; and at least 0.001% but up to 0.200% W;
and optionally from 0% to 0.005% B,
with the balance being Fe and inevitable impurities; and
a hot-dip galvannealing layer formed on a surface of the base steel sheet and, in terms of mass%, consisting of 7 to 15% Fe and at least 0.01% but up to 1.0% of precipitates containing one or more than one selected from the group consisting of Ti, Nb, V, Mo and W, wherein the precipitates are composed of a carbide, with the balance being zinc and inevitable impurities.

2. The hot-dip galvannealed steel sheet according to claim 1, wherein the precipitates have a mean particle diameter of up to 50 nm.

## Patentansprüche

1. Feuerverzinktes wärmebehandeltes Stahlblech, umfassend:
ein Basisstahlblech mit einer solchen chemischen Zusammensetzung, ausgedrückt in Massen%, dass das Basisstahlblech aus:
wenigstens 0,02%, aber bis zu 0,30% C; wenigstens 0,01%, aber bis zu 2,50% Si; wenigstens 0,1%, aber bis zu 3,0% Mn; wenigstens 0,003%, aber bis zu 0,080% P; bis zu 0,01% S; und wenigstens 0,001%, aber bis zu 0,200% Al,
und ferner einem oder mehr als einem, ausgewählt aus wenigstens 0,03%, aber bis zu 0,40% Ti; wenigstens 0,001%, aber bis zu 0,200% Nb; wenigstens 0,001%, aber bis zu 0,500% V; wenigstens 0,01%, aber bis zu 0,50% Mo; und wenigstens 0,001%, aber bis zu 0,200% W;
und gegebenenfalls von 0% bis 0,005% B besteht,
wobei der Rest Fe und unvermeidliche Verunreinigungen sind;
und
eine feuerverzinkte wärmebehandelte Schicht, die auf einer Oberfläche des Basisstahlblechs gebildet ist und, ausgedrückt in Massen%, aus 7 bis 15% Fe und wenigstens 0,01%, aber bis zu 1,0% an Präzipitaten, die eins oder mehr als eins, ausgewählt aus der Gruppe, bestehend aus Ti, Nb, V, Mo und W, enthalten, wobei die Präzipitate aus einem Carbid zusammengesetzt sind, besteht, wobei der Rest Zink und unvermeidliche Verunreinigungen sind.

2. Schmelztauch-Galvannealed-Stahlblech gemäß Anspruch 1, wobei die Präzipitate einen mittleren Partikeldurchmesser von bis zu 50 nm aufweisen.

## Revendications

1. Tôle d'acier recuite par galvanisation par immersion à chaud comprenant :
une tôle d'acier de base ayant une composition chimique en termes de % massique de sorte que la tôle d'acier de base consiste en :
au moins 0,02 %, mais jusqu'à 0,30 % de C ; au moins 0,01 %, mais jusqu'à 2,50 % de Si ; au moins 0,1 %, mais jusqu'à 3,0 % de Mn ; au moins 0,003 %, mais jusqu'à 0,080 % de P ; jusqu'à 0,01 % de S ; et au moins 0,001%, mais jusqu'à 0,200 % d'Al,
et en outre un ou plus d'un pourcentage choisi parmi au moins 0,03 %, mais jusqu'à 0,40 % de Ti ; au moins 0,001 %, mais jusqu'à 0,200 % de Nb ; au moins 0,001 %, mais jusqu'à 0,500 % de V ; au moins 0,01 %, mais jusqu'à 0,50 % de Mo ; et au moins 0,001 %, mais jusqu'à 0,200 de W ;
et éventuellement 0 % à 0,005 % de B,
le reste étant du Fe et des impuretés inévitables ;
et
une couche recuite par galvanisation par immersion à chaud formée sur une surface de la tôle d'acier de base et, en termes de % massique, consistant en 7 à 15 % de Fe et en au moins 0,01 %, mais jusqu'à 1,0 % de précipités contenant un ou plus d'un métal choisi dans le groupe consistant en Ti, Nb, V, Mo et W, dans laquelle les précipités sont composés d'un carbure, le reste étant du zinc et des impuretés inévitables.

2. Tôle d'acier recuite par galvanisation par immersion à chaud selon la revendication 1, dans laquelle les précipités ont un diamètre particulaire moyen jusqu'à 50 nm.
